# EUROPEAN PATENT APPLICATION

(11) **EP 1 115 106 A1**
(43) Date of publication of application: **11.07.2001**
(21) Application number: 99943324.6
(22) Date of filing: 14.09.1999
(51) Int. Cl.: G11B 5/80, G11B 5/84, B42D 15/10

(54) **TRANSFER MAGNETIC TAPE, METHOD OF PRODUCING THE SAME, AND MAGNETIC CARD**

(30) Priority: 14.09.1998 JP 25996498
(71) Applicant: DAINIPPON INK AND CHEMICALS, INC., Itabashi-ku, Tokyo 174-8520 (JP)
(72) Inventor: YANO, Daisuke, Kasukabe-s hi, Saitama 344-0004 (JP); YAMAZAKI, Yoshikazu, Kounosu-shi, Saitama 365-0028 (JP); MIYAHARA, Tessyu, Ageo-shi, Saitama 362-0015 (JP)
(74) Representative: Banzer, Hans-Jörg, Dipl.-Ing.
(86) International application number: JP9905001
(87) International publication number: WO0016319

(57) **Abstract**

A magnetic card is provided in which output variation does not occur even when a printed layer is provided on the magnetic recording layer, and a transferable magnetic tape and method of manufacturing the same is provided such that when the transferable magnetic tape is converted into a card, design can be incorporated on the magnetic stripe without output variation occurring. In a magnetic card in which a magnetic recording layer and a printed layer are formed in sequence on a card base material with the magnetic recording layer closer to the base material, the printed layer comprises a pattern printed region and a region consisting of a filling layer outside the pattern printed region, and moreover the thickness of the printed layer is substantially uniform. In a transferable magnetic tape in which a printed layer, a magnetic recording layer, and an adhesive layer are layered in sequence upon a backing film with the printed layer closest to the backing film, the printed layer comprises a pattern printed region and a region consisting of a filling layer outside the pattern printed region, and moreover the thickness of the printed layer is substantially uniform. In a method of manufacturing a transferable magnetic tape, a pattern printed region is formed on a backing film, a filling layer is subsequently formed in a non-printed region and a printed layer comprising the printed region and the non-printed region is formed so as to have a uniform thickness, and a magnetic recording layer and an adhesive layer are then sequentially layered thereon.

## Description

### TECHNICAL FIELD

The present invention relates to a transferable magnetic tape and a method of manufacturing the same as well as a magnetic card, and in particular relates to a transferable magnetic tape which incorporates a design in the magnetic stripe during the manufacture of a magnetic card, and a magnetic card where a design is incorporated in the magnetic stripe.

This application is based on Japanese Patent Application No. Hei 10-259964, the content of which is incorporated herein by reference.

### BACKGROUND ART

The use of transferable magnetic tape to provide a magnetic stripe in a magnetic card during the manufacture of magnetic cards which incorporate a magnetic stripe such as credit cards, bank cards and ID cards is already widely known. Generally, transferable magnetic tape comprises a magnetic recording layer and an adhesive layer provided in sequence on a backing film. During the manufacturing process of magnetic cards, the adhesive layer of the transferable magnetic tape is superposed with the substrate of the magnetic card, heated and pressurized, and the layer incorporating the magnetic recording layer is transferred onto the base of the magnetic card. The backing film is then removed and subsequent pressing is performed as needed, thereby embedding the magnetic recording layer into the substrate of the card, and producing the magnetic stripe.

Consequently, it is unavoidable that the color of the magnetic recording layer shows on the surface of the magnetic card in the magnetic stripe region, and generally a stripe which is brown or black appears on the surface of the card, placing limitations on the design of the card.

In order to solve this limitation, a transferable magnetic tape has been proposed where a colored layer is provided between the backing film and the magnetic recording layer. However in this case, the entire magnetic stripe simply changes to another color, and limitations still remain in the design of cards.

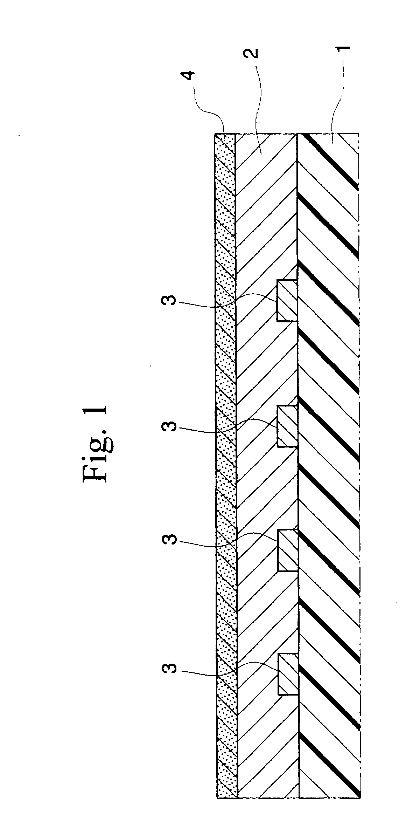

FIG. 1 shows a cross-section of a transferable magnetic tape according to a first conventional technology. The first conventional technology proposes a transferable magnetic tape where a printed layer is provided between a backing film 1 and a magnetic recording layer 2. An adhesive layer 4 is provided on the magnetic recording layer 2 on the opposite surface to the backing film 1. In the case of single color printing when only one type of a printing ink 3 is used, the printed layer is provided by placing the printing ink 3 partially onto the backing film 1, and if a magnetic card is made with this type of transferable magnetic tape, then design can be freely performed on the magnetic stripe, and the degree of freedom in the design of magnetic cards increases. However, with a magnetic card made with this type of transferable magnetic tape, a problem occurs in that the magnetic recording and read-back characteristics are reduced by the printing ink 3 or the like.

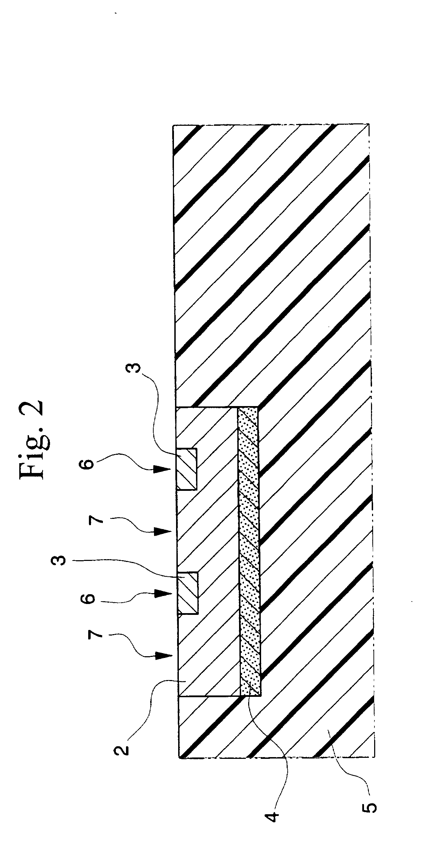

In the case where a magnetic card is manufactured by opposing and superposing an adhesive layer 4 of a transferable magnetic tape where this type of printed layer is provided, and a base material 5 of the magnetic card, and then removing the backing film 1, the printed layer ends up closer to the surface layer of the magnetic card than the magnetic recording layer 2, as shown in FIG. 2. In the case of single color printing where only one type of the printing ink 3 or the like is used, the printed layer comprises a pattern printed region 6 which corresponds with the patterned section, and another non-printed region 7. In the pattern printed region 6, the section of the printing ink 3 which corresponds with the pattern printed region 6 formed by the printing ink, partially covers the surface of the magnetic card, whereas in the non-printed region 7, there is no printing ink 3 section above the magnetic recording layer 2, and the magnetic recording layer 2 is exposed on the surface of the magnetic card.

Normally, the recording and reading of magnetic data is performed by a magnetic head contacting the magnetic stripe of the magnetic card and then moving relative to the stripe. At this time, if the aforementioned printed layer exists, then in the pattern printed region 6, the magnetic head faces the magnetic recording layer 2 through the printing ink 3 section, and a distance develops between the magnetic head and the magnetic recording layer 2. If in this manner, distance develops between the magnetic head and the magnetic recording layer 2, the read-back output reduces, and so called spacing loss occurs.

In contrast, in the non-printed region 7, the magnetic recording layer 2 and the magnetic head are directly facing one another, and spacing loss does not occur. As a result, there is a difference in the read-back output between the pattern printed region 6 where this spacing loss occurs and the non-printed region 7 where spacing loss does not occur, and so variation occurs in the output. Variation in the read-back output is a cause of errors when recording to and reading from magnetic cards, and practical application of a magnetic card which has a large output variation is impossible.

A similar problem is that when the printed layer is printed using multiple colors for example, even in those cases when all of the magnetic recording layer 2 is covered with printing ink 3 of one color or another, if the printing thickness of each color of ink is not specially controlled, then because the degree of spacing loss differs for each color, the problem of output variation occurs in the same manner.

In other words, when the printed layer is formed using multicolor printing, usually a plurality of the printing inks 3 or the like are placed on the backing 1 so that they do not overlap, or that a portion of the printing inks 3 or the like do overlap. Even in the case where the plurality of printing inks 3 are placed so as not to overlap, because each of the printing inks 3 is placed with the reproducibility of the color development as the highest priority, no particular attention is paid to the printing thickness, and it is normal for there to be differences in the printing thickness of each of the plurality of printing inks 3 or the like. As a result, in magnetic cards made using a transferable magnetic tape having a printed layer formed by such multicolor printing, the spacing loss varies for each of the printing inks 3, and variation occurs in the output. Furthermore, when the plurality of printing inks 3 or the like are placed so as to overlap each other, because there is an extremely large difference in spacing loss between the sections where the printing inks are made to overlap and the sections where the printing inks do not overlap, the problems mentioned above occur even more markedly.

In order to improve this kind of output variation, it is necessary to make the printed layer as thin as possible, and keep the size of the spacing loss of the pattern printed region 6 itself, or the range of variation in the spacing loss as small as possible. However if the thickness of the printed layer is reduced, the color of the pattern printed region 6 will be strongly influenced by the color of the magnetic recording, layer 2 positioned therebelow, and a problem arises in that the colorization is reduced markedly. As a result, there is a limit to attempting to reduce the spacing loss by making the printed layer thinner, and it is impossible to completely prevent output variation.

Furthermore, according to a second conventional technology, studies are being conducted to improve the contrast between the pattern printing and the background by providing a colored layer and a masking layer between the printed layer and the magnetic recording layer. In such a case, in the pattern printed region, the magnetic recording layer faces the magnetic head through the printing ink section, the colored layer and the masking layer, whereas in the non-printed region, the magnetic recording layer faces the magnetic head through only the colored layer and the masking layer. As a result, the distance between the magnetic head and the magnetic recording layer, in other words the spacing loss, varies, and variation still occurs in the output.

Furthermore, in contrast, in the aforementioned configuration, a method could be proposed where after the printed layer is provided on the backing film, the colored layer is formed using a leveling coating method such as a knife coating method so as to make the surface of the colored layer smooth, before the masking layer and magnetic recording layer are subsequently applied.

However with this method, because the colored layer is finished smoothly while still wet, when this colored layer subsequently dries and solidifies, volumetric shrinkage occurs, and it is unavoidable that a roughness corresponding with the printing ink section remains on the surface. As a result, even with this method, variation in spacing loss and variation in the output cannot be completely suppressed.

Furthermore, because the colored layer is provided to completely cover the printing ink section, it is unavoidable that the colored layer exist between the printing ink section and the masking layer. Not only does the colored layer in this section not contribute anything to the design of the magnetic card, but when made into a card, the distance between the magnetic head and the magnetic recording layer increases, causing an increase in spacing loss. An increase in spacing loss causes a decrease in the magnetic recording and read-back abilities, especially a decrease in the resolution, and has a large influence on the characteristics of the magnetic card.

As a result, in the case where the colored layer is applied so that the thickness of the colored layer which exists between the printing ink section and the masking layer is reduced, then in the printed layer the area of the pattern printed region is generally comparatively smaller than that of the non-printed region. Therefore, when the wet colored layer is scraped with a knife, the colored layer of the non-patterned section, which is essential, may be excessively scraped, and creating a problem in that the surface is not smooth.

In order to prevent the aforementioned defect, it is necessary to apply the colored layer thickly. In such a case, the spacing loss increases with the existence of the masking layer, and a reduction in the magnetic recording and read-back capabilities is unavoidable.

According to the conventional technology described above, in a transferable magnetic tape having a printed layer, the printed layer is formed by partially placing a printing ink 3 or the like onto a backing film 1. At this time, the printed layer comprises a pattern printed region 6 where the printing ink 3 has been placed and a non-printed region 7 where the printing ink 3 has not been placed, and after the printed layer is formed, the pattern printed region 6 exists on the backing film 1 as a series of protrusions and depressions corresponding with the pattern, and the surface is uneven.

The surface unevenness caused by this kind of printing does not disappear, even when, as described above, multicolor printing is used and the printing ink 3 or the like is placed so as to cover the entire surface of the backing 1, for as long as no particular attention is paid to adjusting the printing thickness, there will usually be a difference in the printing thickness between the different printing inks 3.

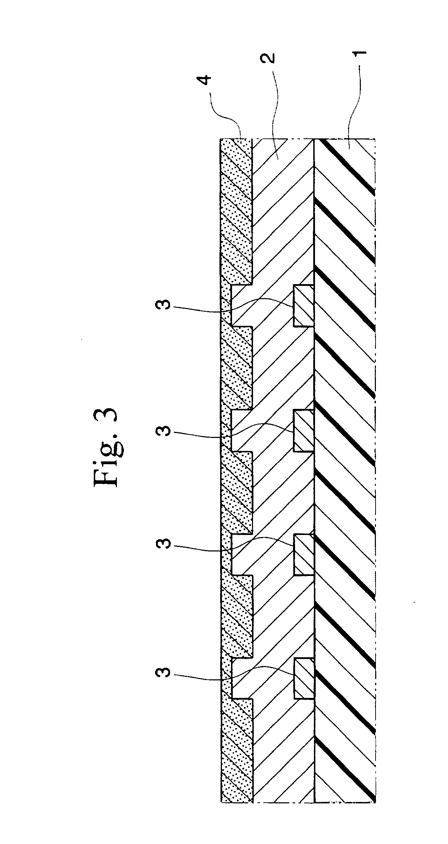

In the first conventional technology, the magnetic recording layer 2 is obtained by applying a magnetic recording layer coating solution onto this uneven printed layer having only the pattern printed region 6. However at this time, if a contour coating method such as a reverse-roll coating method is used, the magnetic recording layer coating solution will be applied at an even thickness, filling in those sections other than the protrusions from the pattern printed region 6, in other words the depressions representing the non-printed region 7 where the printing ink 3 or the like has not been placed. In other words, the boundary surface of the magnetic recording layer 2 above the pattern printed region 6 shows a series of steps displaced perpendicularly above the printing ink 3 sections (protrusions) of the printed layer and the depressions of the non-printed region 7. A typical cross section of this type of transferable magnetic tape is shown in FIG. 3.

In the case where a magnetic card is made using transferable magnetic tape formed in this manner and magnetic recording and read-back is performed, then in the pattern printed region, the magnetic recording layer faces the magnetic head through the printing ink section, and the read-back output is degraded due to spacing loss. In contrast, in the non-printed region, the magnetic recording layer faces the magnetic head directly, and so spacing loss is non-existent and degradation is not seen in the read-back output. Because sections where the read-back output is degraded, and sections where the read-back output is not degraded will pass the magnetic head in sequence in this manner, output variation occurs.

Furthermore, when the magnetic recording layer coating solution is applied onto the printed layer, in the case where a leveling coating method such as a knife coating method is used, the magnetic recording layer coating solution will fill in the sections around the protrusions of the printing ink sections, in other words the depressions of the non-printed region where no printing ink exists. Consequently, the boundary surface of the provided magnetic recording layer on the side of the pattern printed region will show a series of steps reflecting the printing ink sections (protrusions) and the non-printed sections (depressions) of the pattern printed layer.

Furthermore, because the boundary face of the magnetic recording layer on the pattern printed region side displays these steps, whereas the other side is smooth, unevenness appears in the thickness of this magnetic recording layer. A typical cross section of this type of transferable magnetic tape is shown in FIG. 1, and a cross section of a magnetic card made using this transferable magnetic tape is shown in FIG. 2. In a magnetic recording medium on a card, the difference in the thickness of the magnetic recording layer is in proportion to the size of the read-back output, and in the case of the magnetic card shown in FIG. 2, in addition to the occurrence of spacing loss due to the presence of the printing ink 3, variations in output occur as a result of the difference in the thickness of the magnetic recording layer 2, making the output variation of the magnetic card even worse.

Consequently, even when the printed layer is provided between the backing film and the magnetic recording layer, in order to achieve a transferable magnetic tape where output variation does not occur when made into a card, it is essential that the thickness of the magnetic recording layer is uniform and that output variation caused by a difference in the thickness does not occur, and moreover that when made into a card, the distance between the surface of the card and the magnetic recording layer is constant. In other words, the size of the spacing loss must not vary.

The cause of the variation in the spacing loss is that, as described above, the magnetic recording layer is influenced by the protrusions which form the pattern printed region of the printed layer, and the depressions which form the non-printed region, and differences in level occur in the boundary surface on the pattern printed region side of the magnetic recording layer. Consequently, in order to keep the size of this spacing loss constant, the magnetic recording layer should not be influenced by the unevenness resulting from the printing ink sections and the non-printed region of the printed layer which is provided as the lower layer. In other words, it is essential that there be no differences in level on the boundary surface of the magnetic recording layer closer to the pattern printed region side.

This type of magnetic recording layer, where the thickness is constant and in which there are no differences in level, is achieved by applying the coating solution for the magnetic recording layer onto a smooth surface, regardless of whether a contour coating method or a smooth coating method is used. Consequently, in a transferable magnetic tape having a printed layer provided between the backing film and the magnetic recording layer, it is necessary that there be no unevenness in the surface of the printed layer following formation of the layer with printing ink.

### DISCLOSURE OF INVENTION

An object of the present invention is to provide a transferable magnetic tape where a design can be incorporated on the magnetic stripe when producing a card, and a magnetic card where a design has been incorporated in the magnetic stripe, and in particular to provide a magnetic card and a transferable magnetic tape where the occurrence of output variation can be suppressed even in the case where a printed layer is provided.

Specifically, the foremost issue which could not be solved by either the aforementioned first conventional technology or the second conventional technology, is to provide a transferable magnetic tape which enables production of a magnetic card which, regardless of the design to be applied, suffers no variation in the output, and moreover has sufficient resolution and is therefore resistant to errors during recording and reading.

As a result of thorough investigation of transferable magnetic tapes which can enable production of a magnetic card where, as described above, the magnetic properties do not change regardless of what type of design is applied as the printed layer, the inventors discovered that the largest contributing factor to output variation in the case where the magnetic recording layer is uniform, is a printed layer in which the printed thickness is not uniform, and that by forming the printed layer from a pattern printed region and a remaining region made up of a filling layer, and printing these two regions without gaps therebetween so that the printing thickness is uniform, the output variation of the magnetic recording layer can be suppressed regardless of what kind of design is applied. Moreover they discovered that by printing each color of the printing ink or the like in such a manner that the inks do not overlap, the extra ink required for the image of the second printing ink to duplicate and cover the image part of the first printing ink becomes unnecessary and spacing loss is reduced, and as a result, sufficient resolution can be achieved.

The inventors, as a result of thoroughly investigating the layer compositions of the printed layer and the magnetic recording layer required in order to achieve the above object, found that the main reasons for the occurrence of output variation are linked to differences in level in both the boundary surface of the magnetic recording layer closer to the pattern printed region, and the thickness of the magnetic recording layer. In other words, the surface that faces and contacts the magnetic head should be uniformly smooth, and moreover, the distance between this surface and the magnetic recording layer should be constant for all sections, and the region comprising the pattern printed region and the filling layer should not overlap. The inventors found that the above object can be achieved when the thickness of the magnetic recording layer is even, and there are no differences in level in the boundary surface of the magnetic recording layer closer to the pattern printed region.

The present invention was conceived with a view to achieving the above object, and provides a transferable magnetic tape in which a printed layer, a magnetic recording layer, and an adhesive layer are layered in sequence upon a backing film, with the printed layer closest to the backing film, wherein the printed layer comprises:
(1) a pattern printed region and,
(2) a region consisting of a filling layer outside the pattern printed region (1), and moreover
(3) the thickness of the printed layer is substantially uniform.)

### BRIEF DESCRIPTION OF THE DRAWINGS

FIG. 1 is a cross section diagram of a conventional transferable magnetic tape in which a printed layer is provided on a backing film, and a magnetic recording layer coating solution is then applied thereon using a smooth coating method to produce a magnetic recording layer.

FIG. 2 is a cross section diagram of a conventional magnetic card manufactured using a transferable magnetic tape in which a printed layer is provided on a backing film, and a magnetic recording layer coating solution is then applied thereon using a smooth coating method to produce a magnetic recording layer.

FIG. 3 is a cross section diagram of a conventional transferable magnetic tape in which a printed layer is provided on a backing film and a magnetic recording layer coating solution is then applied thereon using a contour coating method to produce a magnetic recording layer.

FIG. 4 is a cross section diagram of a magnetic card manufactured using a transferable magnetic tape according to the present invention.

### BEST MODE FOR CARRYING OUT THE INVENTION

In the present invention, the region which is printed at first is called a pattern printed region (a pattern printed region (1)). Subsequent to the formation of the pattern printed region, secondly a non-printed region, which is the area not covered by the pattern printed region, is filled, forming a region made up of this filling layer (a filling layer region (2)). The printed layer comprising these two regions, the region (1) and the region (2), is produced so that the thickness thereof is substantially uniform. As a result, the thickness of the printed layer becomes substantially uniform. It is necessary that the region (1) and the region (2) are different, and the point of difference is typically the color. As a result, a typical printed layer is printed using multicolor printing.

This type of transferable magnetic tape is obtained by forming the pattern printed region (1) upon a backing film, subsequently forming the filling layer region (2) in the non-printed region not covered by the pattern printed region (1) and forming the printed layer comprising these two regions so that the thickness thereof is uniform, and then sequentially layering a magnetic recording layer and an adhesive layer thereon.

Moreover, publicly known conventional methods can be employed in forming the pattern printed region (1) and the filling layer region (2), although all such methods can use printing ink or the like.

The printing inks or the like used in the present invention are non-magnetic, and the printing inks or the like of the present invention include not only printing inks in the narrow sense comprising a binder resin and a colorant as the essential ingredients, but also at least printing inks comprising only a binder resin. In the present invention, when referring to a printing ink, unless stated otherwise, the above definition of printing ink (printing ink in the broad sense) applies. According to this definition, of the printing inks or the like which comprise the pattern printed region (1) and the filling layer region (2), there are cases where one of the two is a printing ink colored with pigment and the other is a clear printing ink, and there are also cases where both are printing inks of different colors which are colored by different pigments. In brief, the printing ink used in the pattern printed region (1) and that used in the filling layer region (2) should be different.

This type of printed layer which is free of surface irregularities, cannot be considered with conventional multicolor printing. It can only be achieved where, for example, pattern printing is performed on a backing film using a printing ink (a first printing ink No. 1) with the pattern printed region (1) being formed by partial placement of this printing ink, and subsequently, the non-printed region where the printing ink (the first printing ink) has not been placed is filled with a printing ink different from that used in the pattern printed region (a printing ink No. 2) and adjusted so that the thickness is the same as the pattern printed region (1), thereby creating the second region (the filling layer region (2)).

Furthermore, the object can also be achieved by in an opposite manner to that described above, by using the second printing ink used to cover the second region (the non-printed region) and firstly providing a printing ink section where the second printing ink is partially placed on the backing film (this second region corresponds with the filling layer region (2)), and subsequently filling the gap sections where the second printing ink has not been placed using the first printing ink, in a manner so that the thickness is the same as that of the sections of the second printing ink, thereby providing the first printing ink section (corresponding with the pattern printed region (1)).

In other words, after the pattern printed region is formed using the printing cylinder corresponding therewith, the region comprising the filling layer can be formed using the printing cylinder corresponding with the non-printed region. With printing plates, this is attainable by preparing both a positive plate and a negative plate for the same image and using both of these.

Providing a pattern printed region (1) and a filling layer region (2) of equivalent thickness is achieved by, for example, forming the printing inks used when forming the two regions from ingredients for which the color differs but for which the volumetric shrinkage rate which accompanies the drying and solidification thereof is equivalent.

Furthermore, even in the case where the volumetric shrinkage rate of each ink differs, it is possible to make the thickness after drying and solidification equivalent by changing the quantity of each of the printing inks with consideration to these differences.

Furthermore the aforementioned second region (the filling layer region (2)) need not necessarily be composed of only one type of printing ink or the like, and may be composed of two or more regions of different types of printing ink or the like. This is also true for the first region (the pattern printed region (1)).

Even when the first region is formed using two or more different printing inks or the like, and even when the second region is formed using two or more different printing inks or the like, printing is still performed so that the thickness of each of the printing inks is identical, and so that each of the printing inks do not overlap, thereby ensuring that the thickness is identical.

The above describes a situation where the printed layer, comprising the region (1) and the region (2), is provided directly onto the backing film.

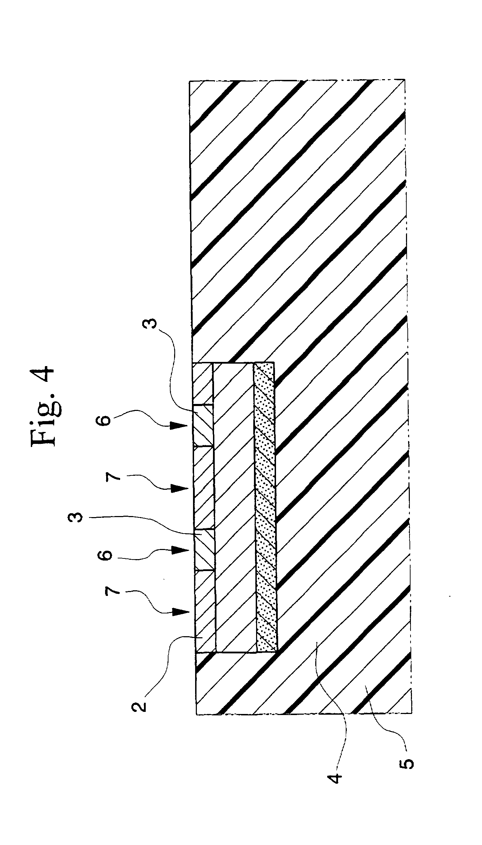

FIG. 4 shows a cross section diagram of a magnetic card obtained by the methods set forth in the present invention. In the figure, numeral 2 shows a magnetic recording layer, numeral 3 a first printing ink, numeral 4 an adhesive layer, numeral 5 a card base material, numeral 6 a pattern printed region (a first region), numeral 8 a second printing ink which is different from the first printing ink, and numeral 9 a filling layer region (a second region excluding the pattern printed region).

When the magnetic recording layer is provided on a printed layer which is provided in this manner, the magnetic recording layer is not influenced by unevenness of the lower printed layer, and there are no differences in level in the boundary surface of the magnetic recording layer closer to the pattern printed region, and it becomes possible to produce a magnetic recording layer of a uniform thickness, which when made into a card will not suffer from output variation.

In the present invention, any of the conventionally used materials can be used as the backing film. This backing film is peeled away at the point where this magnetic card is manufactured, as described below. Examples of suitable backing film materials include polyesters such as polyethylene terephthalate and polyethylene-2,6-naphthalate, polyolefins such as polypropylene, cellulose derivatives such as cellulose triacetate and cellulose diacetate, and plastics such as polyamides and polycarbonates. Among these materials, polyethylene terephthalate, which combines good tensile strength and heat resistance, is preferable.

There is no particular limit on the thickness of the backing film, although typical values are 3 to 100 µm, with thickness values of 5 to 50 µm being preferable.

In the present invention, a protective layer having peelability from the backing film may be provided between the backing film and the printed layer. In such a case, the aforementioned printed layer is formed on top of this protective layer after the protective layer has been provided on the backing film.

The protective layer used in the present invention is removed from the backing film together with the other layers by transfer, and as the outermost layer of all the transferred layers, also has a surface protection function. Examples of suitable materials for the protective layer include cellulose based resins, polyvinyl butyral resin, epoxy resins, phenolic resins, polyester resins, polyurethane resins, acrylic resins, polymethyl methacrylate and copolymers thereof, melamine resin and mixtures of these resins.

In addition, soybean lecithin, phthalic acid based plasticizers, microsilica or waxes or the like can be added to the protective layer as a coating modifying agent according to need.

The protective layer is formed, for example, by applying a coating produced by dissolving and dispersing the aforementioned constituents in a solvent, using conventional methods.

The thickness of the protective layer is 0.5 to 5 µm, and preferably 0.5 to 2 µm.

In the present invention, when a magnetic card is manufactured using a transferable magnetic tape of the present invention, the printed layer is provided so that the desired design can be applied to the magnetic stripe portion of the magnetic card.

In the present invention, it is vital that the thickness of the magnetic recording layer provided upon the printed layer is uniform and also that there are no differences in level in the boundary surface of the magnetic recording layer closer to the pattern printed region. This kind of magnetic recording layer can be attained by forming the printed layer from a printing ink section which corresponds with the design and a section of at least one other type of printing ink, and by ensuring that the thickness of these sections is uniform. In other words, it is necessary that the printed layer is formed of at least two or more sections of an equal thickness.

The printing ink section which forms the pattern printed region is formed by printing a printing ink containing, for example, a pigment, a dye, a resin binder and a solvent for dissolving the resin binder onto either the backing film or a protective layer which has been provided on the backing film.

Suitable examples of the pigment used in the printing ink or the like include; inorganic pigments such as alumina, titanium oxide, chrome oxide, iron oxide, zinc oxide and barium sulfate, and organic pigments such as azo based pigments, phthalocyanine based pigments, quinacridone based pigments, perylene based pigments, anthraquinone based pigments, thioindigo based pigments and indanthrene based pigments, but there are no particular restrictions on the pigments which can be used. The printing ink is made by blending either a single type or two or more types of pigment with the binder resin and dispersing the mixture using conventional methods.

Furthermore, in place of or used jointly with the aforementioned pigment, dyes such as phthalocyanine dyes, azo dyes, nitro dyes, quinoline dyes, methine dyes, azine dyes and phthalein dyes can be used.

Suitable materials for the binder resin and the solvent include those materials detailed below.

Conventional binder resins can be used as the binder resin. Suitable examples include butyral resin, vinyl chloride-vinyl ether copolymer resins, urethane resins, polyester resins, cellulose based resins, acrylic resins, and styrene-maleic acid copolymer resins, and rubber resins such as nitrile rubber or urethane elastomer can be added to these resins according to need. Furthermore, heat curing can also be performed using an isocyanate compound.

Suitable solvents include, for example, ketone based solvents such as acetone, methyl ethyl ketone (MEK), methyl isobutyl ketone (MIBK) and cyclohexanone, ester based solvents such as methyl acetate, ethyl acetate and butyl acetate, alcohol based solvents such as methanol, ethanol and propanol, hydrocarbons such as hexane, benzene, toluene and xylene, and ether based solvents such as glycol dimethyl ether, glycol monoethyl ether, dioxane and tetrahydrofuran, and these solvents can also be used as mixtures of two or more solvents.

Furthermore, for the materials which form the printing ink sections of the pattern printed region, by using materials which absorb or reflect light of a specific wavelength, materials which emit fluorescence or phosphorescence, materials which retain light, or other materials which can be detected by a specific method, be it visible or invisible, tamper proof and forgery proof properties can be added. These materials can also be used to form the filling layer region.

In the forming of the printing ink section of the first region, conventional printing methods such as gravure printing, flexographic printing, offset printing and screen printing can be used, although from the viewpoint of print quality and productivity, gravure printing is particularly well suited.

The printing ink used to fill the second region (the non-printed region) is obtained by filling the second region so that the thickness of the second printing ink following drying is the same as the thickness of the first region (the pattern printed region).

A printing ink which differs from the first printing ink can be used as the printing ink for filling the second region (the non-printed region) in the same manner as the first printing ink, and for example, the aforementioned binder resin solution containing the binder resin and the solvent to dissolve the binder resin can be used, and pigment and dye can be added to the aforementioned binder resin solution according to need. When the sections other than the first region are printed using the second printing ink which is of a different color to the first printing ink, the non-printed region also becomes colored, further improving the ability to incorporate designs on the magnetic card.

Furthermore, the printing ink used for forming the first region and the printing ink used for forming the second region may also be a resin having UV curing, EB curing, or electron beam curing properties. Furthermore, thermoplastic resins can also be used following heating and melting.

The important factors when choosing a printing ink, for both the first printing ink and the second printing ink, are that the materials have no magnetic properties, that the thickness after drying and hardening is controllable, and that each printing ink section can be provided at the same thickness. Furthermore, the printing ink which forms the first region and the printing ink which forms the second region must be different.

When producing the printing ink for forming the second region, conventional pigments and dyes can be added to the aforementioned resin binder solution, in the same manner as the printing ink for forming the first region. In such cases, the second region (the non-printed region) also becomes colored, and the ability to incorporate designs on the magnetic card is further improved.

Furthermore, by including in the printing ink for forming the second region, materials which absorb or reflect light of a specific wavelength, materials which emit fluorescence or phosphorescence, materials which retain light, or other materials which can be detected by a specific method, be it visible or invisible, tamper proof and forgery proof properties can be added.

Moreover, instead of composing the second region of a single printing ink, a plurality of printing inks can also be used, creating two or more regions.

Any conventional printing method or coating method can be used for filling the second region, but using a printing method, and particularly a gravure printing method, is preferable from the viewpoint of productivity and simplicity.

Furthermore, the printed layer can also be obtained by firstly forming the second region (the section corresponding with the non-printed region) by a conventional printing method, and then filling in the gaps therein with the printing ink for forming the aforementioned first region (the pattern printed region).

In such cases, any conventional printing method or coating method can be used as the filling method, but using a printing method is preferable, particularly a gravure printing method.

The pattern printed region and the filling layer region which make up the printed layer must be provided so that the thickness after drying and solidification is the same for both regions, and a thickness of 0.5 to 5 µm is desirable, with values of 0.5 to 2 µm being particularly desirable from the perspective of spacing loss.

In the present invention, magnetic powder and binder resin are the essential ingredients of the magnetic recording layer.

The magnetic recording layer is formed by applying a magnetic paint containing, for example, a magnetic powder, a resin binder and a solvent for dissolving the resin binder, onto the backing film where the printed layer has been formed, and subsequently drying the magnetic paint.

The thickness of the magnetic recording layer is preferably within the range of 2 to 100 µm, with values of 5 to 20 µm being even more desirable.

Suitable magnetic powders which can be used include conventional magnetic powders such as γ-ferric oxide, magnetic iron ore, cobalt gamma ferric oxide, chromium dioxide, iron based metallic magnetic powders, barium ferrite and strontium ferrite. For the magnetic powder, a coercivity in the range of 20 to 320 kA/m is preferable.

Commonly used binder resins can be used as the binder resin. Suitable examples include butyral resin, vinyl chloride-vinyl ether copolymer resins, urethane resins, polyester resins, cellulose based resins, acrylic resins, and styrene-maleic acid copolymer resins, and rubber resins such as nitrile rubber or urethane elastomer can be added to these resins according to need. Furthermore, heat curing can also be performed using an isocyanate compound.

Suitable solvents include, for example, ketone based solvents such as acetone, methyl ethyl ketone (MEK), methyl isobutyl ketone (MIBK) and cyclohexanone, ester based solvents such as methyl acetate, ethyl acetate and butyl acetate, alcohol based solvents such as methanol, ethanol and propanol, hydrocarbons such as hexane, benzene, toluene and xylene, and ether based solvents such as glycol dimethyl ether, glycol monoethyl ether, dioxane and tetrahydrofuran, and these solvents can also be used as mixtures of two or more solvents.

The magnetic paint is obtained by mixing and dispersing, for example, the aforementioned magnetic powder, a resin binder and a solvent.

Furthermore, auxiliaries such as surface active agents, silane coupling agents, plasticizers, wax and silicone oil may be added to the dispersed material resulting from the dispersion of the magnetic powder in the aforementioned resin, and carbon black and other fillers can also be added.

Various mixing and dispersion devices can be used for the mixing and dispersion required to make the magnetic paint. Suitable examples of mixing and dispersion devices include a two roll mill, a three roll mill, a ball mill, a pebble mill, a Henschel mixer, a cobble mill, a thoron mill, a sand mill, a sand grinder, a segubariatoraita, a high speed impeller disperser, a high speed stone mill, a high speed impact mill, a Disper, a high speed mixer, a homogenizer, an ultrasound disperser, an open kneader, a continuous kneader and a pressurized kneader.

Moreover a masking layer may also be formed between the printed layer and the magnetic recording layer. The masking layer masks the color of the magnetic recording layer, and is placed between the magnetic recording layer and the printed layer in order to enhance the coloring of the printed layer. This masking layer can be obtained by, for example, mixing and dispersing in a resin binder, metal powders such as aluminum, copper, and silver, or pigments such as titanium oxide, zinc oxide and silica, and then applying the masking layer coating to the printed layer using a conventional method and subsequently drying the layer. The masking layer can also be colored by adding conventional pigments and dyes. Furthermore, a metal evaporated layer can also be used as the masking layer, and in such a case, a metal evaporated layer can be formed by producing the layer from metals such as aluminum and tin using a method such as vacuum deposition or sputtering. The masking layer may also comprise a plurality of layers.

Of course, a protective layer having peelability from the backing film can also be provided between the backing film and the printed layer as well as a masking layer being provided between the printed layer and the magnetic recording layer.

In the case where a coating method is used to provide the masking layer, a thickness of 0.5 to 5 µm is preferable, whereas in the case where a metal evaporated layer is used as the masking layer, a thickness of 0.05 to 0.5 µm is preferable.

In a transferable magnetic tape, the combined thickness of the protective layer, the printed layer and the masking layer which exist between the backing film and the magnetic recording layer should be made as small as possible, and from the perspective of magnetic recording and read-back characteristics when made into a card, a total of no more than 10 µm is preferable, with values of less than 6 µm being particularly desirable.

The adhesive layer used in the present invention is generally obtained by dissolving a resin which displays thermal adhesiveness properties in a solvent, adjusting the adhesive coating by mixing and agitation, and then applying this adhesive coating onto the magnetic recording layer using conventional methods and subsequent drying of the layer.

Examples of resins which show properties of thermal adhesiveness include, for example, vinyl chloride based resins such as copolymers of vinyl chloride and vinyl acetate, or copolymers which also incorporate vinyl alcohol, maleic anhydride or acrylic acid, as well as polyester resins, acrylic resins, polyimide resins and polyurethane resins.

The thickness of the adhesive layer should preferably be 0.5 to 15 µm, with values of 0.5 to 5 µm being particularly desirable.

The main points of the present invention are that the thickness of the magnetic recording layer provided on the printed layer is uniform, and that there are no differences in level in the boundary surface of the magnetic recording layer closer to the pattern printed region. Other than the points described above, there are no limitations on the methods for forming the printed layer or the methods for forming the magnetic recording layer.

Examples of materials which can be used as the substrate (the card base material) of the magnetic card on which the transferable magnetic tape according to the present invention is used include plastic film or sheet made of polyvinyl chloride, nylon, cellulose diacetate, polystyrene, polyethylene, polypropylene, polyester, polyimide or polycarbonate, metals such as copper or aluminum, paper, impregnated paper, cloth paper, or a complex comprising any of these ingredients. There are no particular limitations on materials different from those listed above, provided they have sufficient strength to be used as a magnetic recording medium.

A magnetic card according to the present invention is a magnetic card in which a magnetic recording layer and a printed layer are formed in sequence on a card base material with the magnetic recording layer closer to the base material, wherein the printed layer comprises:
(1) a pattern printed region and,
(2) a region consisting of a filling layer outside the pattern printed region (1), and moreover
(3) the thickness of the printed layer is substantially uniform.

The magnetic card is usually manufactured from a transferable magnetic tape according to the present invention.

A magnetic card according to the present invention can be obtained by using a transferable magnetic tape of the present invention, superposing the adhesive layer of the tape with the card base material, adhering the two together, and then peeling off the backing film of the transferable magnetic tape to achieve the transfer. Alternatively, the magnetic card can also be obtained by first peeling the backing film off the transferable magnetic tape of the present invention, then superposing the adhesive layer with the card base material and then adhering the two together. Furthermore, if needed, the adhesive layer of the transferable magnetic tape can be adhered to a portion of the card base material and the outermost layer of the magnetic tape then embedded so to be flush with the surface of the card base material.

A magnetic card according to the present invention can also be obtained by using a transferable magnetic tape of the present invention, transferring one side of the magnetic recording layer onto a transparent vinyl chloride oversheet, subsequently sandwiching an opaque vinyl chloride inner core which functions as the substrate of the magnetic card between the oversheet to which the magnetic recording layer was transferred and one other transparent vinyl chloride oversheet, and then performing thermocompression before punching the medium out into a card shape. However, magnetic cards of the present invention are not limited to this construction. For example, a transferable magnetic tape of the present invention could simply be used as the aforementioned magnetic card substrate, and the layers, including the magnetic recording layer, then transferred directly thereon.

### Embodiments of the Invention

1. A transferable magnetic tape in which a printed layer, a magnetic recording layer, and an adhesive layer are layered in sequence upon a backing film, with the printed layer closest to the backing film, wherein the printed layer comprises:
   (1) a pattern printed region and,
   (2) a region consisting of a filling layer outside the pattern printed region (1), and moreover
   (3) the thickness of the printed layer is substantially uniform.
2. A transferable magnetic tape according to the first aspect of the present invention described above, wherein the filling layer comprises a printing ink.
3. A transferable magnetic tape according to either one of the first aspect and the second aspect of the present invention, wherein a protective layer is provided between the backing film and the printed layer.
4. A transferable magnetic tape according to either one of the first aspect and the second aspect of the present invention, wherein a masking layer is provided between the printed layer and the magnetic recording layer.
5. A transferable magnetic tape according to either one of the first aspect and the second aspect of the present invention, wherein a protective layer is provided between the backing film and the printed layer, and a masking layer is provided between the printed layer and the magnetic recording layer.
6. A method of manufacturing a transferable magnetic tape wherein a pattern printed region is formed on a backing film, a filling layer is subsequently formed in a non-printed region and a printed layer comprising the printed region and the non-printed region is formed so as to have a uniform thickness, and a magnetic recording layer and an adhesive layer are then sequentially layered thereon.
7. A method of manufacturing a transferable magnetic tape according to the sixth aspect of the present invention described above, wherein the filling layer comprises a printing ink.
8. A method of manufacturing a transferable magnetic tape according to the sixth aspect of the present invention described above, wherein the pattern printed region is formed after the protective layer is formed upon the backing film.
9. A method of manufacturing a transferable magnetic tape according to the sixth aspect of the present invention described above, wherein a masking layer is provided between the printed layer and the magnetic recording layer.
10. A method of manufacturing a transferable magnetic tape according to the sixth aspect of the present invention described above, wherein a protective layer is provided between the backing film and the printed layer, and a masking layer is provided between the printed layer and the magnetic recording layer.
11. A method of manufacturing a transferable magnetic tape according to the seventh aspect of the present invention described above, wherein after the pattern printed region is formed using a printing cylinder corresponding therewith, the filling layer is formed using a printing cylinder corresponding with the non-printed region.
12. A magnetic card in which a magnetic recording layer and a printed layer are formed in sequence on a card base material with the magnetic recording layer closer to the base material, wherein the printed layer comprises:
   (1) a pattern printed region and,
   (2) a region consisting of a filling layer outside the pattern printed region (1), and moreover
   (3) the thickness of the printed layer is substantially uniform.
13. A magnetic card according to the twelfth aspect of the present invention described above, comprising an adhesive layer on the card base material.
14. A magnetic card according to the twelfth aspect of the present invention described above, comprising a protective layer on top of the printed layer.
15. A magnetic card according to the twelfth aspect of the present invention described above, comprising a masking layer between the printed layer and the magnetic recording layer.
16. A magnetic card according to the twelfth aspect of the present invention described above, comprising a protective layer on the printed layer and a masking layer between the printed layer and the magnetic recording layer.

### Examples

The present invention will be described in greater detail below using working examples and comparative examples. However, the present invention is not limited to these examples. The term "parts" below refers to units of mass.

### Example 1

Using a polyethylene terephthalate film with a thickness of 24 µm as a backing film, a composition a described below was applied to one side of the film using a reverse coating method to provide a protective layer which, following drying, had a thickness of 1 µm. Subsequently, using a composition b described below, a printing ink was applied by gravure printing in a pattern corresponding with the pattern of a printed layer, so that the thickness following drying was 1.5 µm (the pattern printed region (1)), and following drying, a gravure plate which is the negative pattern of the aforementioned pattern, was used to perform gravure printing with a composition c described below to produce a thickness after drying of 1.5 µm (the filling layer region (2)). A magnetic recording layer was then applied using a composition d described below, using a reverse coating method, to produce a thickness following drying of 7 µm, and subsequently, a reverse coating method was used to provide an adhesive layer of a composition e described below, yielding a thickness following drying of 1.5 µm. A transferable magnetic tape was then prepared by cutting the film onto which these layers had been applied, into a predetermined width.

| a: protective layer composition | |
|---|---|
| polyvinyl butyral resin ("S-LEC BM-1" manufactured by Sekisui Chemical Co. Ltd.) | 10 parts |
| MEK | 35 parts |
| toluene | 35 parts |
| ethyl alcohol | 20 parts |

| b: printed layer, composition for forming the pattern printed region | |
|---|---|
| titanium oxide | 20 parts |
| vinyl chloride-vinyl acetate copolymer resin ("VAGH" manufactured by Union Carbide Ltd.) | 10 parts |
| MEK | 35 parts |
| toluene | 25 parts |
| ethyl acetate | 10 parts |

| c: printed layer, composition for forming the filling layer region | |
|---|---|
| vinyl chloride-vinyl acetate copolymer resin | 15 parts |
| ("VAGH" manufactured by Union Carbide Ltd.) | |
| MEK | 35 parts |
| toluene | 35 parts |
| ethyl acetate | 15 parts |

| d: magnetic recording layer composition | |
|---|---|
| barium ferrite magnetic powder (manufactured by Toda Kogyo Co. Ltd., coercivity 220 (kA/m)) | 40 parts |
| vinyl chloride based resin ("MR-110" manufactured by Nippon Zeon Co. Ltd.) | 6 parts |
| polyurethane resin ("L7-750" manufactured by Dainippon Ink and Chemicals, Inc.) | 11 parts |
| MEK | 18 parts |
| toluene | 18 parts |
| cyclohexanone | 7 parts |

| e: adhesive layer composition | |
|---|---|
| polyurethane resin | 1.5 parts |
| ("TS-03" manufactured by Dainippon Ink and Chemicals, Inc) | |
| vinyl chloride-vinyl acetate copolymer resin ("1000LT3" manufactured by Denki Kagaku Consequently. Ltd.) | 3.5 parts |
| MEK | 45 parts |
| toluene | 50 parts |

### Example 2

A transferable magnetic tape was produced in the same manner as that described for the example 1, with the exceptions that a composition f described below was used as the composition for forming the pattern printed region of the printed layer, and a composition g described below was used as the composition for forming the filling layer region of the printed layer.

| f: printed layer, composition for forming the pattern printed region | |
|---|---|
| titanium oxide | 15 parts |
| phthalocyanine | 5 parts |
| vinyl chloride-vinyl acetate copolymer resin ("VAGH" manufactured by Union Carbide Ltd.) | 10 parts |
| MEK | 35 parts |
| toluene | 25 parts |
| ethyl acetate | 10 parts |

| g: printed layer, composition for forming the filling layer region | |
|---|---|
| aluminum powder | 20 parts |
| vinyl chloride-vinyl acetate copolymer resin ("VAGH" manufactured by Union Carbide Ltd.) | 10 parts |
| MEK | 35 parts |
| toluene | 25 parts |
| ethyl acetate | 10 parts |

### Comparative example 1

A transferable magnetic tape was produced in the same manner as that described for the example 1, with the exception that the printed layer of example 1 was formed using only the printing ink section corresponding with the pattern printed region, and the magnetic recording layer and the adhesive layer were then formed without providing the filling layer region (the printing ink section corresponding with the non-printed region).

### Comparative example 2

A transferable magnetic tape was produced in the same manner as that described for the comparative example 1, with the exception that the thickness of the pattern printed region from the comparative example 1 was reduced to 0.5 µm.

### Example 3

Using a polyethylene terephthalate film with a thickness of 24 µm as a backing film, a composition a described above was applied to one side of the film using a reverse coating method to provide a protective layer which, following drying, had a thickness of 1 µm. Subsequently, using a composition b described above, a printing ink was applied by gravure printing in a pattern corresponding with the pattern of a printed layer, so that the thickness following drying was 1 µm (the pattern printed region (1)), and following drying, a gravure plate which is the negative pattern of the aforementioned pattern, was used to perform gravure printing with a composition g described above to produce a thickness after drying of 1 µm (the filling layer region (2)). Subsequently, a masking layer of the composition g described above was provided using a reverse coating method so that the thickness following drying was 2 µm, and a magnetic recording layer was then applied onto the masking layer using a composition d described above, using a reverse coating method, to produce a thickness following drying of 7 µm. Subsequently, a reverse coating method was used to provide an adhesive layer of a composition e described above, yielding a thickness following drying of 1.5 µm. A transferable magnetic tape was then prepared by cutting the film onto which these layers had been applied, into a predetermined width.

### Comparative example 3

Using a polyethylene terephthalate film with a thickness of 24 µm as a backing film, a composition a described above was applied to one side of the film using a reverse coating method to provide a protective layer which, following drying, had a thickness of 1 µm. Subsequently, using a composition b described above, a printing ink was applied by gravure printing in a pattern corresponding with the pattern of a printed layer, so that the thickness following drying was 1 µm (the pattern printed region (1)). Subsequently, a masking layer of the composition g described above was provided using a reverse coating method so that the thickness following drying was 2 µm, and a magnetic recording layer was then applied onto the masking layer using a composition d described above, using a reverse coating method, to produce a thickness following drying of 7 µm. Subsequently, a reverse coating method was used to provide an adhesive layer of a composition e described above, yielding a thickness following drying of 1.5 µm. A transferable magnetic tape was then prepared by cutting the film onto which these layers had been applied, into a predetermined width.

### Comparative example 4

Using a polyethylene terephthalate film with a thickness of 24 µm as a backing film, a composition a described above was applied to one side of the film using a reverse coating method to provide a protective layer which, following drying, had a thickness of 1 µm. Subsequently, using a composition b described above, a printing ink was applied by gravure printing in a pattern corresponding with the pattern of a printed layer, so that the thickness following drying was 1 µm (the pattern printed region (1)). Subsequently, a masking layer of the composition g described above was applied using an applicator coating method so that the wet surface was smooth and the thickness following drying was 1 µm, and a magnetic recording layer was then applied onto the masking layer using a composition d described above, using a reverse coating method, to produce a thickness following drying of 7 µm. Subsequently, a reverse coating method was used to provide an adhesive layer of a composition e described above, yielding a thickness following drying of 1.5 µm. A transferable magnetic tape was then prepared by cutting the film onto which these layers had been applied, into a predetermined width.

### Comparative example 5

A transferable magnetic tape was produced in the same manner as that described for the comparative example 4, with the exception that the thickness of the masking layer from the comparative example 4 was increased to 2 µm.

### Comparative example 6

A transferable magnetic tape was produced in the same manner as that described for the comparative example 5, with the exception that the thickness of the masking layer from the comparative example 4 was increased to 5 µm.

### Test items and results

Using the transferable magnetic tapes obtained in the examples 1 to 3 and the comparative examples 1 to 6, each of the layers was transferred onto a polyvinyl chloride card substrate using a card production machine (manufactured by Interline Ltd.), and in each case the backing film was then removed, and press working used to produce a magnetic card. The layer structure of a card type magnetic recording medium according to the examples of the present invention is shown in FIG. 4. Subsequently, the design capability of each card was evaluated by visual observation.

Furthermore, evaluation of the output variation of the magnetic cards was performed by carrying out recording and reading with a recording density of 200ftpi and a recording current value of Imin, and measuring the maximum output and the minimum output at that time as ratios (%) relative to the reference signal amplitude (UR), and then determining the difference (R1) and the standard deviation (D1). Here, UR is the maximum value of the read-back output when the recording current is changed and recording and reading is performed with a reference tape. Furthermore if the recording current which provides an output equivalent to 80% of the maximum value is termed IR, then Imin is defined as the recording current which generates 2.8 times the magnetic flux of the magnetic flux FR induced in the head by the recording current IR.

The same measurements were also performed (R2, D2) with a recording density of 500ftpi and a recording current value of Imax. Here, Imax is defined as the recording current which generates 3.5 times the magnetic flux of FR. When the values of R1, D1, R2 and D2 are large, the output variation is also large. Measurements were performed using a MAG-TESTER 2000 (manufactured by Barnes International Ltd.), and the measurements were conducted under the measurement conditions outlined in the ISO/IEC7811-6 standard. Furthermore, in the case of the occurrence of output variation corresponding with the printed layer, evaluation was conducted based on an output variation graph.

Next, evaluation of the resolution was conducted using the fraction Ua3/Ua2, produced by dividing the size of the average output (Ua3) when recording is performed with the recording current value at Imax and the recording density at 500ftpi, by the average output (Ua2) when recording is performed with the recording current value at Imax and the recording density at 200ftpi. The results are shown in Table 1.

Regarding the design capability of the magnetic cards, the example 1 and the comparative example 1, where the color of the magnetic recording layer was used as the background color and the color of the printing ink section was used to draw the pattern, were reasonably good. Furthermore, the design capability of the example 2, where pigment was included in the printing ink section, was also good because the background was also colored, although the design capability of the example 3 and the comparative examples 3, 5, and 6, where a masking layer is provided for masking the color of the magnetic recording layer, was best and displayed very distinct contrast. The design capability deteriorated somewhat in the comparative example 4 because the thickness of the masking layer was very thin, and in the comparative example 2, where the thickness of the printing ink sections was very thin, the coloring of the pattern was poor and was also the most indistinct.

Regarding the output variation of the cards, in the examples 1, 2 and 3 where both a first region (the pattern printed region (1)) and a second region (the filling layer region (2)) were provided, output variation did not occur. In contrast, in the comparative examples 1, 2 and 3 where no second region (filling layer region (2)) was provided, variation in the output was marked. Furthermore, regarding the comparative examples 4, 5 and 6 where a leveling coating method was used during application of the masking layer so that the surface of the masking layer was smooth, output variation was marked in the comparative example 4 where the masking layer was very thin, but gradually improved in the comparative examples 5 and 6 as the masking layer became thicker. However, compared to the examples 1, 2 and 3, the level of output variation was still high. Furthermore, in the comparative example 6, because the thickness of the masking layer, at 5 µm, was very large, the level of the resolution reduced, and the magnetic recording and read-back characteristics worsened.

**Table 1**

| | E-1 | E-2 | CE-1 | CE-2 | E-3 | CE-3 | CE-4 | CE-5 | CE-6 |
|---|---|---|---|---|---|---|---|---|---|
| R1 | 7 | 8 | 14 | 12 | 8 | 17 | 18 | 15 | 17 |
| D1 | 1.18 | 1.21 | 2.23 | 1.89 | 1.38 | 3.05 | 3.54 | 2.72 | 2.89 |
| R2 | 8 | 8 | 13 | 10 | 8 | 15 | 17 | 15 | 16 |
| D2 | 0.91 | 0.93 | 1.86 | 1.65 | 1.17 | 2.68 | 3.18 | 2.64 | 2.69 |
| Design capability | C | B | C | D | A | B | C | B | A |
| Output variation | A | A | D | C | A | D | D | C | B |
| resolution (%) | 94 | 94 | 94 | 94 | 93 | 93 | 94 | 92 | 87 |
| Note: E-1 refers to the example 1, CE-1 to the comparative example 1. The other examples are abbreviated in a similar manner. | | | | | | | | | |

### Design capability

A: The contrast and coloring are good, and the design capability is extremely high.
B: The contrast is good and the design capability is high. The coloring has deteriorated somewhat.
C: The contrast and coloring have both deteriorated somewhat, but the design capability is high.
D: The coloring is poor and the design capability is low.

### Output variation

A: No variation observed in the output corresponding with the printed layer.
B: A little variation occurs in the output corresponding with the printed layer.
C: Variation occurs in the output corresponding with the printed layer.
D: Marked variation occurs in the output corresponding with the printed layer.

### INDUSTRIAL APPLICABILITY

In a magnetic card in which a printed layer is provided on the magnetic stripe in order to improve the ability to incorporate designs on the card, by providing the magnetic recording layer so that the thickness thereof is uniform and so that there are no differences in level in the boundary surface of the magnetic recording layer closer to the pattern printed region, a magnetic card can be produced which has both good magnetic recording characteristics and good design capability and for which output variation does not occur. Furthermore, when the card is undergoing the transfer process and being manufactured, then for the transferable magnetic tape which provides the printed layer, by using a transferable magnetic tape where the magnetic recording layer is formed so that the thickness is uniform and so that there are no differences in level in the boundary surface of the magnetic recording layer closer to the pattern printed region, the superior card described above can be achieved easily.

## Claims

1. A transferable magnetic tape in which a printed layer, a magnetic recording layer, and an adhesive layer are layered in sequence upon a backing film with said printed layer closest to said backing film, wherein said printed layer comprises:
(1) a pattern printed region and,
(2) a region consisting of a filling layer outside said pattern printed region (1), and moreover
(3) a thickness of said printed layer is substantially uniform.

2. A transferable magnetic tape according to claim 1, wherein said filling layer comprises a printing ink.

3. A transferable magnetic tape according to either one of claim 1 and claim 2, wherein a protective layer is provided between said backing film and said printed layer.

4. A transferable magnetic tape according to either one of claim 1 and claim 2, wherein a masking layer is provided between said printed layer and said magnetic recording layer.

5. A transferable magnetic tape according to either one of claim 1 and claim 2, wherein a protective layer is provided between said backing film and said printed layer, and a masking layer is provided between said printed layer and said magnetic recording layer.

6. A method of manufacturing a transferable magnetic tape, wherein a pattern printed region is formed on a backing film, a filling layer is subsequently formed in a non-printed region and a printed layer comprising said printed region and said non-printed region is formed so as to have a uniform thickness, and a magnetic recording layer and an adhesive layer are then sequentially layered thereon.

7. A method of manufacturing a transferable magnetic tape according to claim 6, wherein said filling layer comprises a printing ink.

8. A method of manufacturing a transferable magnetic tape according to claim 6, wherein said pattern printed region is formed after said protective layer is formed upon said backing film.

9. A method of manufacturing a transferable magnetic tape according to claim 6, wherein a masking layer is provided between said printed layer and said magnetic recording layer.

10. A method of manufacturing a transferable magnetic tape according to claim 6, wherein a protective layer is provided between said backing film and said printed layer, and a masking layer is provided between said printed layer and said magnetic recording layer.

11. A method of manufacturing a transferable magnetic tape according to claim 7, wherein after said pattern printed region is formed using a printing cylinder corresponding therewith, said filling layer is formed using a printing cylinder corresponding with said non-printed region.

12. A magnetic card in which a magnetic recording layer and a printed layer are formed in sequence on a card base material with said magnetic recording layer closer to said base material, wherein said printed layer comprises:
(1) a pattern printed region and,
(2) a region consisting of a filling layer outside said pattern printed region (1), and moreover
(3) a thickness of said printed layer is substantially uniform.

13. A magnetic card according to claim 12, having an adhesive layer on said card base material.

14. A magnetic card according to claim 12, further having a protective layer on said printed layer.

15. A magnetic card according to claim 12, further having a masking layer between said printed layer and said magnetic recording layer.

16. A magnetic card according to claim 12, having a protective layer on said printed layer and a masking layer between said printed layer and said magnetic recording layer.
